# EUROPEAN PATENT SPECIFICATION

(11) **EP 1 759 954 B1**
(45) Date of publication and mention of the grant of the patent: **27.02.2008**
(21) Application number: 05291822.4
(22) Date of filing: 01.09.2005
(51) Int. Cl.: B61L 3/12, B61L 15/00, H04N 7/18

(54) **Method and system for monitoring a public transport vehicle**
Verfahren und System zum Überwachen eines Fahrzeugs für den öffentlichen Personenverkehrs
Procédé et système pour surveiller des véhicules de transport en commun

(43) Date of publication of application: 07.03.2007
(73) Proprietor: Alcatel Lucent, 75008 Paris (FR)
(72) Inventor: Trautwein, Wolfgang, 71634 Ludwigsburg (DE)
(74) Representative: Brose, Gerhard

(56) References cited:
- EP-A- 0 560 314
- EP-A- 1 157 913
- WO-A-94/00953
- WO-A-20/05058668
- DE-A1- 10 209 210
- GB-A- 1 252 093
- GB-A- 2 392 983
- US-A1- 2001 050 709
- US-A1- 2002 135 471
- LIANG X ET AL: "Mobile internet access for high-speed trains via heterogeneous networks" PERSONAL, INDOOR AND MOBILE RADIO COMMUNICATIONS, 2003. PIMRC 2003. 14TH IEEE PROCEEDINGS ON SEPT. 7-10, 2003, PISCATAWAY, NJ, USA,IEEE, 7 September 2003 (2003-09-07), pages 177-181, XP010681580 ISBN: 0-7803-7822-9

## Description

The present invention relates in general to a method and system for monitoring public transport vehicles, such as trains, and more specifically to a method and system for monitoring and providing to the train's driver door side view and operating information.

As it is known from the prior art WO 94/00953, for trains with just one driver, i.e. with no guard personnel available, there is the need to ensure that when the driver operates the remotely controlled doors they are opened safely on the correct platform side. Further, there is a need to provide the driver with information of the status of the platform and the vehicle's doors.

For providing platform information to a train driver it is common to use closed circuit television systems with cameras mounted on the platform, which provide a clear view of the side of the train, and with monitors mounted in the driver's cab, which display said train side view. Specific information regarding the correct door side opening may be introduced as data into the transmission between the cameras and the driver's display monitor. Said information may be separately detected and used to give a visual or audible indication to the driver and/or to give an electronic signal to the door controls such that only if the correct command is given by the driver the correct side door is opened.

Also known from WO 2005/058668 A is an image processing alarm system and a method for automatically sensing an unexpected accident related to a train. A station platform, a railway part, the interior of train cars, and a railway crossing are intensively monitored using a plurality of image sensing apparatuses, so that an emergency situation is automatically detected when it occurs.

It is the object of the present invention to provide an improved monitoring method and system for a public transportation vehicle.

The object is achieved by a method for monitoring a public transport vehicle according to claim 1 and a monitoring system for a public transport vehicle according to claim 8.

In accordance with the present invention, a monitoring system provides a solution for a rail platform configuration in which a train platform side has to be monitored and displayed to the train's driver in any direction. The monitoring system comprises a transmitting part, located in the platform, in charge of camera recording, video signal processing and conversion and video and/or data transmission from a transmitter point, and a receiving part, located inside the train driver's cab, which displays platform train side view and/or information if the driver is activating the right door side opening control.

One important feature of the monitoring method and system of the invention is a security measure for indicating to the driver if he is activating the correct train side doors. The receiving part of the monitoring system checks at least two signals, a first machine-generated signal, indicating "left" or "right", coming from the train's door control system, which is used to indicate the side of the train through which the passengers shall get out and/or get in, and a second man-generated signal, indicating "left" or "right", by which the driver confirms the train side which shall be opened/closed. If the at least two signal indications indicate the same side of the train then the monitor system displays on the driver's monitor the video and/or data information received from the correct transmitting point. On the other hand, if the signal indications do not indicate the same train side, then the receiving part does not displays any platform video signal on the driver's monitor and/or gives to the driver an error indication.

Another important feature of the monitoring method of the invention is a transmission control measure for avoiding interference between transmitter points located in different platform locations and transmitting information in the same direction. In order to send video and/or data information, the transmitting part of the monitoring system may use any wireless transmission technique. In a preferred embodiment of the invention such transmission is done using known WLAN (Wireless Local Area Network) techniques. Since the same frequency range is used for transmission from each of the transmitter points, measures are taken to avoid interference between them, such as using directive antennas, reducing the beam width in the driver's monitor direction and controlling the radio frequency power transmitted.

Still another important feature of the monitoring method and system of the invention is a measure to ensure that the correct train side is displayed in the driver's monitor. This measure is based on network identifiers given to the transmitter points of the transmitting part of the system.

Further advantageous configurations of the invention emerge from the dependent claims, the following description and the drawings.

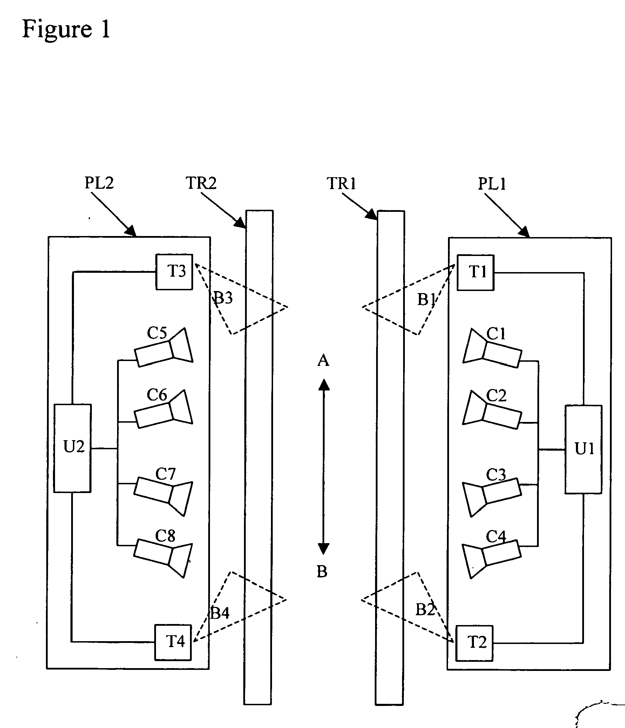

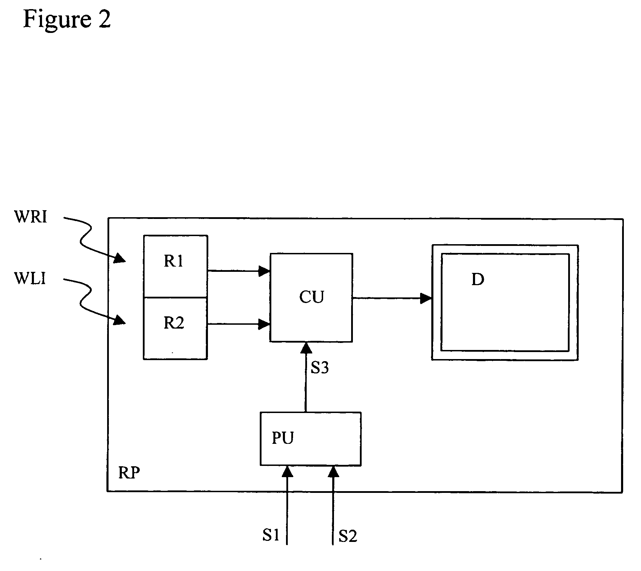

An embodiment example of the invention is now explained with the aid of Figures 1 and 2.
Figure 1 shows a block diagram of a transmitting part of a monitoring system according to the invention, in an exemplary rail platform configuration.
Figure 2 shows a block diagram of a receiving part of a monitoring system according to the invention inside the train driver's cab.

Figure 1 shows a block diagram top view of a transmitting part of a monitoring system according to the invention. An exemplary station is shown having two platforms PL1 and PL2 and two train tracks TR1 and TR2, situated between said two platforms, and on which the trains circulate on either direction A or B. The exemplary monitoring system transmitting part of the figure comprises eight cameras C1 to C8, two processing units U1 and U2 and four transmitter points T1 to T4. The cameras C1 to C8 are divided in two groups, one for each platform. Each camera group is connected to a processing unit U1 or U2 and each processing unit is connected to two transmitter points, T1 and T2 or T3 and T4 respectively, which transmit information to a driver's display in the train driver's cab via transmission beams B1 to B4.

In normal operation, cameras C1 to C4 transmit video signals to processing unit U1, said processing unit U1 converts said video signals into a suitable transmission format and/or processes said video signals and passes the information to transmitter points T1 or T2 depending on the position of the train driver's cab, said transmitter points T1 or T2 then transmit the information through beams B1 or B2 to the train driver's display. In the same manner, cameras C5 to C8 transmit video signals to processing unit U2, said processing unit U2 converts said video signals into a suitable transmission format and/or processes said video signals and passes the information to transmitter points T3 or T4 depending on the position of the train driver's cab, said transmitter points T3 or T4 then transmit the information through beams B3 or B4 to the train driver's display.

In a preferred implementation of the monitoring system, the camera video signals and/or other data information are transmitted via a radio beam B1 to B4 according to WLAN transmission technology standards. Since the system uses the same transmission frequency range, e.g. public WLAN frequencies, for each transmitter point T1 to T4, the system provides measures to avoid interference between transmitter points. For this purpose the system may use directive antennas and/or reduce the beam width in the direction of the driver's display and/or reduce the radio transmission power at each transmitter point T1 to T4. Additionally, the transmitter points T1 to T4 may send polling sequences all the time to show activity and avoid that the same frequency is used by two or more of them at the same time. It has to be noted that the area covered in Figure 1 by the transmission beams B1 to B4 is just an example and that the transmission beam coverage pattern for each transmitter point could be changed according to the interference measures described above, that is, larger coverage areas could be achieved and some of the transmission beams coverage areas maybe overlapping each other.

Further measures may be taken to ensure that the correct train side information is given to the train driver. For this purpose each transmitter point T1 to T4 has a network identifier which is used by the monitoring system to identify which train side information is being transmitted at a given time. For example, transmitter points T1 and T4 have a network identifier which is used to indicate that they transmit information concerning the right side of the train in track one TR1 or track two TR2 respectively; and transmitter points T2 and T3 have a network identifier which is used to indicate that they transmit information concerning the left side of the train in track one TR1 or track two T2 respectively.

In a preferred embodiment of the invention each two transmitter points, T1 and T4 ; T2 and T3, have the same network identifier, the network identifier for T1 and T4 being different as the network identifier for T2 and T3, and the transmission beam coverage areas for transmitter points having the same network identifier do not overlap.

Although the transmitting part of the monitoring system of Figure 1 shows two different processing units U1 and U2, this has to be understood as two logical processing units which could be implemented as two different physical units or could be integrated in just one physical unit. In the latter scenario, two different logical functions could take care of controlling the elements situated in the two platform sides.

The transmitter points T1 to T4 may not transmit platform video and/or data information all the time. Transmission of said data information may only be done when a transmitter point detects a receiver point located within its transmission beam coverage area. Alternative methods for transmitting information are also possible, for example, an external input signal may be connected to any processing unit U1 or U2 providing information about train track and drivers cab position.

Figure 2 shows a block diagram of a receiving part RP of a monitoring system according to the invention. The monitoring system receiving part RP, located inside the train driver's cab, comprises two logical independent receiver points R1 and R2, a first receiver point R1 configured to receive wireless signals sent by transmitter points transmitting train right side information WRI, and a second receiver point R2 configured to receive wireless signals sent by transmitter points transmitting train left side information WLI; and the receiver points R1 and R2 pass said information signals in data format to a control unit CU which processes said data and/or converts it into a format suitable to be displayed on the driver's display D, such as a video signal and/or a sequence of data characters. A conversion of any received data to an audible indication may also be possible. The receiving part also comprises a processing unit PU receiving at least two signals S1 and S2, a first machine generated signal S1, indicating "left" or "right" side, coming from the train's internal door control system, and a second man-generated signal S2, indicating "left" or "right" side, coming from the driver's control panel, and which is generated for example by pushing a button, by which the driver releases the train doors which shall be opened/closed; and the processing unit PU providing a third signal S3 to the control unit CU depending on the values of the signals S1 and S2.

The processing unit PU checks signals S1 and S2 and when both indicate the same train side, "left" or "right" side, a signal S3 is generated which indicates the control unit CU that no error occurs and the train door side which shall be operated, "left" or "right". The control unit CU then passes "left" or "right" side data information, received by receiver points R2 or R1 respectively, to the driver's display D. On the other hand, when signals S1 and S2 do not indicate the same train side, e.g. the driver pressing the wrong release door button, or any of the signals is missing, e.g. the driver forgetting to press any button, the processing unit PU generates a signal S3 indicating an error to the control unit CU. In that case, the control unit CU may either do not pass any train side information to the driver's display or generate an error indication into that driver's display D.

Although in the preceding example of Figure 2 the processing unit PU deals with at least two signals S1 and S2 and with at least four indications, that is, two machine generated indications, "left" or "right", and two man-generated indications, "left" or "right", it is understood that the processing unit PU could be implemented dealing with four signals, one for each indication. In that case, situations in which three or four signals are activated could be considered also as errors and signaled to the control unit CU.

Finally, it has to be understood that although the examples of the invention have been directed to monitor the door operation of trains, the method of the invention can also be applied to any public transportation vehicle with a station configuration similar to the one shown in the previous examples and where monitoring is needed.

## Claims

1. Monitoring method for a public transport vehicle, such as a train, the method providing a side view of the train to the train's driver by means of transmitting side devices located at the train's station platform (PL1, PL2) and receiving side devices located at the train driver's cab, the transmission side using at least two transmitter points (T1 to T4) transmitting data information through transmission beams (B1 to B4) according to a wireless transmission technique, and the transmitter points (T1 to T4) using the same range of frequencies, the method **characterized by** providing each transmitter point (T1 to T4) with a network identifier in order to identify which train side information is being transmitted.

2. The method of claim 1 **characterized in that** the transmitter points (T1 to T4) transmit with directive antennas in the direction of the driver's cab.

3. The method of claim 1 **characterized in that** the transmitter points (T1 to T4) transmit with a narrow beam width in the direction of the driver's cab.

4. The method of claim 1 **characterized in that** the transmitter points (T1 to T4) transmit with low radio power in the direction of the driver's cab.

5. The method of claim 1 using at least four transmitter points (T1 to T4) and each transmitter point (T1 and T4 ; T2 and T3) intended for transmission of the same train side information having the same network identifier, the network identifier for transmitter points (T1, T4) intended for transmitting train right side information being different as the network identifier for transmitter points (T2, T3) intended for transmission of train left side information, and the transmission beam (B1 and B4 ; B2 and B3) coverage area for transmitter points having the same network identifier not overlapping.

6. The method of claim 1 **characterized by**, at the receiving side,
- receiving train left and right side information (WRI, WLI),
- receiving at least two signals (S1, S2), a first signal (S1) from the train's internal automatic door control system, and a second signal (S2) from the driver's manual-activated control panel, each signal indicating a train side, and
- displaying train left or right side information or an error indication on a driver's monitor (D) depending on the two signal (S1, S2) indications.

7. The method of claim 6 **characterized by** not displaying any train side information on the train driver's display (D) when both signals (S1 and S2) indicate different train sides.

8. Monitoring system for a public transport vehicle, such as a train, the system comprising a transmitting part located at the train's station platform (PL1, PL2) and a receiving part located at the train driver's cab, the transmitting part comprising at least two transmitter points (T1 to T4) with means for transmitting data information through a radio transmission beam (B1 to B4) according to a wireless transmission technique in the same range of frequencies, **characterized in that** each transmitter point (T1 to T4) has a network identifier and the monitoring system is adapted to identify which train side information is being transmitted according to the network identifier.

9. The monitoring system of claim 8 **characterized in that** the transmitting part comprises at least four transmitter points (T1 to T4), and in which each transmitter point (T1 and T4 ; T2 and T3) intended for transmission of the same train side information having the same network identifier, the network identifier for the transmitter points (T1, T4) intended for transmission of train right side information being different as the network identifier for transmitter points (T2, T3) intended for transmission of train left side information, and the transmission beam (B1 and B4 ; B2 and B3) coverage area for transmitter points having the same network identifier not overlapping.

10. The monitoring system of claim 8 **characterized in that** the receiving part comprises receptor means (R1, R2) for receiving train left and right side information (WRI, WLI); means for receiving at least two signals (S1, S2), a first signal (S1) from the train's automatic door control system, and a second signal (S2) from the driver's manual-activated control panel, both signals indicating a train side; and means for displaying train left or right side information or an error indication on a driver's monitor (D) depending on the two signal (S1, S2) indications.

## Patentansprüche

1. Verfahren zum Überwachen eines Fahrzeugs für den öffentlichen Personenverkehr, beispielsweise einen Zug, wobei das Verfahren eine Seitenansicht des Zuges an den Triebfahrzeugführer mittels sendeseitigen Einrichtungen liefert, die sich auf dem Bahnsteig des Zuges (PL1, PL2) befinden, und empfangsseitige Einrichtungen, die sich im Führerstand des Zuges befinden, wobei die Sendeseite mindestens zwei Sendestellen (T1 bis T4) nutzt, welche Dateninformationen über Sendestrahlenbündel (B1 bis B4) entsprechend einer drahtlosen Übertragungstechnik übertragen, und wobei die Sendestellen (T1 bis T4) denselben Frequenzbereich nutzen, wobei das Verfahren **dadurch gekennzeichnet ist, dass** es für jede Sendestelle (T1 bis T4) eine Netzwerkkennung bereitstellt, um zu kennzeichnen, von welcher Seite des Zuges gerade Informationen übertragen werden.

2. Verfahren nach Anspruch 1, **dadurch gekennzeichnet, dass** die Sendestellen (T1 bis T4) mit auf den Führerstand ausgerichteten Richtantennen senden.

3. Verfahren nach Anspruch 1, **dadurch gekennzeichnet, dass** die Sendestellen (T1 bis T4) mit einer schmalen Strahlbreite in Richtung des Führerstandes senden.

4. Verfahren nach Anspruch 1, **dadurch gekennzeichnet, dass** die Sendestellen (T1 bis T4) mit geringer Funkleistung in Richtung des Führerstandes senden.

5. Verfahren nach Anspruch 1, wobei mindestens vier Sendestellen (T1 bis T4) verwendet werden und jede Sendestelle (T1 und T4; T2 und T3), die für die Übertragung von Informationen derselben Zugseite bestimmt ist, dieselbe Netzwerkkennung aufweist, wobei die Netzwerkkennung für die Sendestellen (T1, T4), die dazu bestimmt sind, Informationen von der rechten Seite des Zuges zu übertragen, verschieden ist von der Netzwerkkennung für die Sendestellen (T2, T3), die für die Übertragung von Informationen von der linken Seite des Zuges bestimmt sind, und wobei der Funkversorgungsbereich der Sendestrahlenbündel (B1 und B4; B2 und B3) für Sendestellen, welche dieselbe Netzwerkkennung aufweisen, sich nicht überlappt.

6. Verfahren nach Anspruch 1, **dadurch gekennzeichnet, dass** auf der Empfangsseite
- Informationen von der linken und von der rechten Seite des Zuges (WRI, WLI) empfangen werden;
- mindestens zwei Signale (S1, S2) empfangen werden, ein erstes Signal (S1) vom internen automatischen Türsteuerungssystem des Zuges und ein zweites Signal (S2) vom manuell aktivierten Steuerpult des Triebfahrzeugführers, wobei jedes Signal eine Zugseite angibt; und
- in Abhängigkeit von den Angaben der beiden Signale (S1, S2) Informationen von der linken oder von der rechten Seite des Zuges oder eine Fehlerangabe auf einem Anzeigegerät (D) des Triebfahrzeugführers angezeigt werden.

7. Verfahren nach Anspruch 6, **dadurch gekennzeichnet, dass** überhaupt keine Informationen auf dem Anzeigegerät (D) des Triebfahrzeugführers angezeigt werden, wenn beide Signale (S1 und S2) unterschiedliche Zugseiten angeben.

8. System zum Überwachen eines Fahrzeugs für den öffentlichen Personenverkehr, beispielsweise einen Zug, wobei das System einen Übertragungsteil umfasst, der sich auf dem Bahnsteig des Zuges (PL1, PL2) befindet, und einen Empfangsteil, der sich im Führerstand des Zuges befindet, wobei der Sendeteil mindestens zwei Sendestellen (T1 bis T4) mit Mitteln zur Übertragung von Dateninformationen über ein Sendestrahlenbündel (B1 bis B4) entsprechend einer drahtlosen Übertragungstechnik im selben Frequenzbereich umfasst, **dadurch gekennzeichnet, dass** jede Sendestelle (T1 bis T4) eine Netzwerkkennung aufweist und das Überwachungssystem dafür geeignet ist, anhand der Netzwerkkennung zu erkennen, von welcher Seite des Zuges gerade Informationen übertragen werden.

9. Überwachungssystem nach Anspruch 8, **dadurch gekennzeichnet, dass** der Übertragungsteil mindestens vier Sendestellen (T1 bis T4) umfasst, und wobei jede Sendestelle (T1 und T4; T2 und T3), die für die Übertragung von Informationen derselben Zugseite bestimmt ist, dieselbe Netzwerkkennung aufweist, wobei die Netzwerkkennung für die Sendestellen (T1, T4), die dazu bestimmt sind, Informationen von der rechten Seite des Zuges zu übertragen, verschieden sind von der Netzwerkkennung für die Sendestellen (T2, T3), die für die Übertragung von Informationen von der linken Seite des Zuges bestimmt sind, und wobei der Funkversorgungsbereich der Sendestrahlenbündel (B1 und B4; B2 und B3) für Sendestellen, welche dieselbe Netzwerkkennung aufweisen, sich nicht überlappt.

10. Überwachungssystem nach Anspruch 8, **dadurch gekennzeichnet, dass** der Empfangsteil umfasst: Empfangsmittel (R1, R2) zum Empfangen von Informationen von der linken und von der rechten Seite des Zuges (WRI, WLI); Mittel zum Empfangen von mindestens zwei Signalen (S1, S2), einem ersten Signal (S1) vom internen automatischen Türsteuerungssystem des Zuges und einem zweiten Signal (S2) vom manuell aktivierten Steuerpult des Triebfahrzeugführers, wobei beide Signale eine Zugseite angeben; und Mittel zum Anzeigen von Informationen von der linken oder rechten Seite des Zuges oder einer Fehlerangabe auf einem Anzeigegerät (D) des Triebfahrzeugführers in Abhängigkeit von den Angaben der beiden Signale (S1, S2).

## Revendications

1. Procédé de surveillance destiné à un véhicule de transport en commun, tel qu'un train, le procédé fournissant une vue latérale du train au conducteur de train au moyen de dispositifs du côté de la transmission situés sur le quai de gare du train (PL1, PL2) et de dispositifs du côté de la réception situés au niveau de la cabine du conducteur de train, le côté de la transmission utilisant au moins deux points transmetteurs (T1 à T4) transmettant des informations sur les données de transmission par l'intermédiaire de faisceaux de transmission (B1 à B4) selon une technique de transmission sans fil, et les points transmetteurs (T1 à T4) utilisant la même plage de fréquences, le procédé étant **caractérisé en ce qu'**il fournit à chaque point transmetteur (T1 à T4) un identificateur de réseau afin d'identifier le côté du train dont relèvent les informations qui sont en cours de transmission.

2. Procédé selon la revendication 1, **caractérisé en ce que** les points transmetteurs (T1 à T4) transmettent avec les antennes directives dans la direction de la cabine du conducteur.

3. Procédé selon la revendication 1, **caractérisé en ce que** les points transmetteurs (T1 à T4) transmettent avec une largeur de faisceau étroite dans la direction de la cabine du conducteur.

4. Procédé selon la revendication 1, **caractérisé en ce que** les points transmetteurs (T1 à T4) transmettent avec une faible puissance radioélectrique dans la direction de la cabine du conducteur.

5. Procédé selon la revendication 1 utilisant au moins quatre points transmetteurs (T1 à T4) et chaque point transmetteur (T1 et T4 ; T2 et T3) prévu pour la transmission des informations du même côté du train ayant le même identificateur de réseau, l'identificateur de réseau pour les points transmetteurs (T1, T4) prévus pour la transmission des informations du côté droit du train étant différent en tant qu'identificateur de réseau pour les points transmetteurs (T2, T3) prévus pour la transmission des informations du côté gauche du train, et les zones de couverture des faisceaux de transmission (B1 et B4 ; B2 et B3) pour les points transmetteurs ayant le même identificateur de réseau ne se superposant pas.

6. Procédé selon la revendication 1, **caractérisé** au niveau du côté de réception par les étapes suivantes :
- réception des informations du côté gauche et droit du train (WRI, WLI),
- réception d'au moins deux signaux (S1, S2), d'un premier signal (S1) venant du système de commande automatique interne des portes du train, et d'un deuxième signal ( S2) venant du panneau de commande activé manuellement par le conducteur, chaque signal indiquant un côté du train, et
- affichage des informations du côté gauche ou droit du train ou indication d'erreur sur le dispositif de surveillance du conducteur (d) en fonction des deux indications de signal (S1, S2).

7. Procédé selon la revendication 6 **caractérisé, en ce qu**'il n'affiche aucune information de côté du train sur le dispositif d'affichage du conducteur (D) quand les deux signaux (S1 et S2) indiquent des côtés différents du train.

8. Système de surveillance destiné à un véhicule de transport en commun, tel qu'un train, le système comprenant une partie de transmission située sur le quai de gare du train (PL1, PL2) et une partie de réception située au niveau de la cabine du conducteur de train, la partie de transmission comprenant au moins deux points transmetteurs (T1 à T4) avec des moyens permettant de transmettre des informations sur les données par l'intermédiaire d'un faisceau de transmission radioélectrique (B1 à 84) selon une technique de transmission sans fil dans la même plage de fréquences, **caractérisé en ce que** chaque identificateur de réseau a un point transmetteur (T1 à T4) et le système de surveillance est adapté pour identifier le côté du train dont relèvent les informations en cours de transmission selon l'identificateur de réseau.

9. Système de surveillance selon la revendication 8, **caractérisé en ce que** la partie de transmission comprend au moins quatre points transmetteurs (T1 à T4), et dans lequel chaque point transmetteur (T1 et T4 ; T2 et T3) prévu pour la transmission des informations du même côté du train a le même identificateur de réseau, l'identificateur de réseau pour les points transmetteurs (T1, T4) prévus pour la transmission des informations du côté droit du train est différent en tant qu'identificateur de réseau pour les points transmetteurs (T2, T3) prévus pour la transmission des informations du côté gauche du train, et les zones de couverture des faisceaux de transmission (B1 et B4 ; B2 et B3) pour les points transmetteurs ayant le même identificateur de réseau ne se superposent pas.

10. Système de surveillance selon la revendication 8, **caractérisé en ce que** la partie de réception comprend des moyens récepteurs (R1, R2) permettant de recevoir des informations de côté gauche et droit (WRI, WLI) ; des moyens permettant de recevoir au moins deux signaux (S1, S2), un premier signal (S1) venant du système de commande automatique des poiles du train, et un deuxième signal ( S2) venant du panneau de commande activé manuellement par le conducteur, les deux signaux indiquant un côté du train ; et des moyens permettant d'afficher des informations de côté gauche ou droit du train ou une indication d'erreur sur un dispositif de surveillance du conducteur (D) en fonction des deux indications de signal (S1, S2).
